# EUROPEAN PATENT SPECIFICATION

(11) **EP 1 898 653 B1**
(45) Date of publication and mention of the grant of the patent: **01.04.2009**
(21) Application number: 06120157.0
(22) Date of filing: 05.09.2006
(51) Int. Cl.: H04W 88/18, H04W 4/00

(54) **Apparatus and method for optimising page transmission by removing redundant page values in a radio communication system**
Gerät und Verfahren zur Optimierung von Funkrufübertragung durch Entfernung von redundanten Funkrufwerten in einem Funkkommunikationssystem
Appareil et procédé pour optimiser la transmission d'appels par suppression de données redondantes dans un système de radiocommunication

(43) Date of publication of application: 12.03.2008
(60) Divisional application: 09151038.8
(73) Proprietor: Research In Motion Limited, Waterloo, Ontario N2L 3W8 (CA)
(72) Inventor: Willey, William Daniel, San Francisco, CA 94109 (US)
(74) Representative: Fennell, Gareth Charles

(56) References cited:
- EP-A- 1 696 593
- WO-A-03/024146

## Description

The present invention relates generally to a manner by which to page an access terminal of a radio communication system to alert the access terminal of a pending call, or other communication. More particularly, the present invention relates to apparatus, and an associated method, by which to form a quick page message that is selectably free of redundant values.

When quick paging is performed using a partial identity comparison, the pages included in the quick page message are of configurations and lengths best to minimize the occurrence of false wakeup of an access terminal to which the message is broadcast. Excessive battery depletion as a result of false wakeup of the access terminal is avoided.

### Background of the Invention

Advancements in communication technologies have permitted the development and deployment of new types of communication systems and communication services. Cellular telephony, and associated communication services available therethrough, are popularly utilized by many, typically providing users with communication mobility and also provides the capability of communications when the use of wireline communication systems would not be practical or possible.

While early-generation, cellular communication systems provided primarily for voice communications and only limited data communication services, newer-generation systems increasingly provide for high-speed data communication services at variable data communication rates. A CDMA2000, cellular communication system that provides for EV-DO services is an exemplary type of new-generation, cellular communication system that provides for high-speed data services. Operational details and protocols defining communications and operational requirements of devices of the system are set forth in an operating standard specification. Various aspects of operation of the CDMA2000 EV-DO communication scheme remain to be standardized and certain parts of the existing standard specification are considered for amendment. Various successor-generation communication schemes are also undergoing standardization and yet others are envisioned to be standardized.

[0004A] EP 1 696 593 A2 discloses a group page system wherein portable terminals transmit their locations and a group page identifier for the portable terminal. WO 03/024146 discloses a sequential demodulation of quick paging channels based on the power or energy levels of the respective signals.A revision to the standard specification, release B of the CDMA2000 EV-DO specification standard, defines a quick paging channel (QPCH) available upon which to broadcast access-terminal pages by an access network (AN) to an access terminal (AT). The QPCH was adopted in industry contributions 3GPP2 C20-20060323-013R1 and 3GPP2 C20-20060323-003R1 and published in 3GPP2 document C.S0024-B VI .0. Generally, pages are broadcast by the access network to an access terminal to alert the access terminal of a pending communication. And by so alerting the access terminal, the access terminal performs actions to permit the effectuation of the communication. Page indications broadcast upon the quick paging channel are broadcast in a manner that facilitates reduced battery consumption of the access terminal by reducing the battery consumption of the battery of the access terminal. Increased battery longevity is provided, reducing the rate at which a battery of the access terminal must be recharged. The access terminal is, as a result, able to be operated for a greater period of time between rechargings or battery replacement. The aforementioned promulgations provide for broadcast of a message including page indications upon a physical logical layer that is monitored by the access terminal. The access terminal monitors the QPCH prior to monitoring the control channel to receive regular, control channel MAC (medium access control) messages such as page messages. A quick page message is broadcast upon the QPCH.

A quick page message includes a number of quick page indicator slots populated with the quick page indicators that indicate whether an access terminal is being paged. An exemplary configuration of a scheme that utilizes page indications is set forth, for instance, in industry contribution 3GPP2 C20-20060731-033. In this configuration, during operation, a mobile station hashes to a quick page indicator location, i.e., slot, within the quick page message based upon a session seed, a 32-bit pseudorandom number. If the quick page indicator of the quick page indicator slot to which the access terminal hashes indicates that the access terminal is not being paged, the access terminal enters into a sleep state, a reduced-power state, in which the access terminal does not remain powered at a level to receive the regular control channel MAC messages. Power savings is particularly significant in the event that the control channel MAC messages are lengthy and span multiple control channel frames or capsules.

An access terminal that monitors for the delivery of a quick page message, reads the content of the message and compares the values with corresponding values, that is, portions of the identifier of that access terminal. If the values do not match, then the access terminal enters into a reduced power state, e.g., a sleep state.

The QPCH message, as presently-proposed in, e.g., in the EV-DO Release B signaling QPCH, provides thirty-five page indication locations, i.e., bits available to be populated with paging indicators. The aforementioned "partial hash comparison" scheme utilizes three of the thirty-five page indication locations for identifying the number of pages, and the remaining page indication locations are available for paging, *viz*., are available. While the proposed, partial comparison scheme reduces the false wakeup probability when paging load is relatively low, when the paging load increases, the reduction in the available page indication locations actually increases the possibility of false wakeup. When more than five access terminals are paged, partial hash comparison is not used due to this increased possibility. Instead, hashing to page indication locations is performed.

If a manner could be provided by which to improve the performance of a scheme that utilizes partial comparison pursuant to paging by better reducing the possibility of false wakeup, improved battery longevity of the access terminal would be possible.

It is in light of this background information related to paging by an access network of an access terminal that the significant improvements of the present invention have evolved.

### Brief Description of the Drawings

Figure 1 illustrates a functional block diagram of a radio communication system in which an embodiment of the present invention is operable.

Figure 2 illustrates a process diagram representative of the process of 10 operation of an embodiment of the present invention.

Figure 3 illustrates a method flow diagram listing the method of operation of an embodiment of the present invention.

### Detailed Description

The present invention, accordingly, advantageously provides apparatus, and an associated method, by which to page an access terminal of a radio communication system to alert the access terminal of a pending call, or other communication.

Through operation of an embodiment of the present invention, a manner is provided by which to form a quick page message that is selectably free of redundant values.

When quick paging is performed using a partial identity comparison, the pages included in the quick page message are of configurations and lengths best to minimize the occurrence of redundant values.

In another aspect of the present invention, a partial identity scheme is utilized in the quick paging procedure. The partial identity comparison utilizes parts of access terminal identifiers (ATIs) or other numbers that are associated with access terminals that are paged. The portion of the ATI, or other number, that is included in the quick page message comprises, for instance, a selected number of most significant bits of the number.

As the length of the quick page message is prescribed, e.g., is of a thirty-five bit length, the lengths of the parts of the ATIs or other numbers included in the quick page message are limited by this prescribed length. If multiple pages are contained in the quick page message, only fractional portions of the parts of the ATIs or other numbers are able to be included in the quick page message. When the number of pages increase, the size, i.e., lengths, of the parts of the numbers that are includable in the quick page message are reduced.

A first portion of the quick page message, such as a first, three-bit portion, identifies the number of pages in the message. If the quick page message is of a length of thirty-five bits, and, e.g., the number of page indications is three-bits in length, then the number of bits available to identify the access terminals is reduced to thirty-two of the thirty-five bits. When a single access terminal is paged, all thirty-two bits are available by which to identify the paged access terminal. When two access terminals are paged, half of the thirty-two available bits are available to identify each of the two access terminals being paged. Analogously, when three access terminals are paged, one-third of the thirty-two bits are available to identify each of the three access terminals being paged. Because three does not divide into thirty-two equally, the number of bits available to identify different ones of the three access terminals is dissimilar. Or, one or more bits are not utilized to identify the paged access terminals. Analogous divisions and distributions are provided for higher numbers of paged access terminals.

In another aspect of the present invention, a determination is first made of the number of pages that are to be included in the quick page message. And, the corresponding parts of ATIs or other numbers that are used to identify the paged access terminals are configured. The most significant bits, for instance, of the number known to both the access terminal and the access network are used. For example, parts of the ATIs are utilized. For example, if sixteen bits are available to identify an access terminal, such as when the quick page message is to page two access terminals, the sixteen most significant bits of the number are utilized. If preferred, least significant bits are instead utilized. A comparator compares the values that identify the access terminals. In the event that the values identifying the different access terminals that are to be paged correspond, then redundant values are deleted by a redundant page value remover. The bits that would otherwise need to be provided for population with the redundant values are able, instead, to be utilized for other purposes. For instance, in the event that seven access terminals are to be paged and two of the seven access terminals are identified with ATIs that have most significant bits of the same values, the redundant values need not be included in the quick page message but, instead, the five unique sets of values are included in the quick page message.

In a further aspect of the present invention, all of the bit locations of the quick page message available to identify access terminals are used. The number of bits available to identify each access terminal need not be equal. For instance, if three access terminals are to be paged in the quick page message, two of the terminals are identified with ten bit values while a third of the access terminals is identified with an eleven bit-length value. Through use of all of the available parts of the quick page message, false wakeup of an access terminal is proportionately less likely to occur.

In these and other aspects, therefore, apparatus, and an associated method, is provided for an access network of a communication network that generates a first page message on a first paging channel. A determiner is configured to determine page values of each page identifier set of each page intended to be included in the first page message. A redundant page value remover is configured selectably to remove page values intended to be included in the first page message that are redundant to page values of another page identifier set, if any, also intended to be part of the first page message. The first page message is formed of page value sets selectably free of page value set redundancies.

In these and further aspects, apparatus, and an associated method, is provided for an access terminal that monitors a first paging channel for delivery of a first paging message. A number of page detector is configured to detect how many page identifier sets are included in the first paging message. A page identifier set value detector is configured to detect values of each page identifier set detected by the number of page detector to be included in the first paging message. The first paging message is selectably free of page value set redundancies.

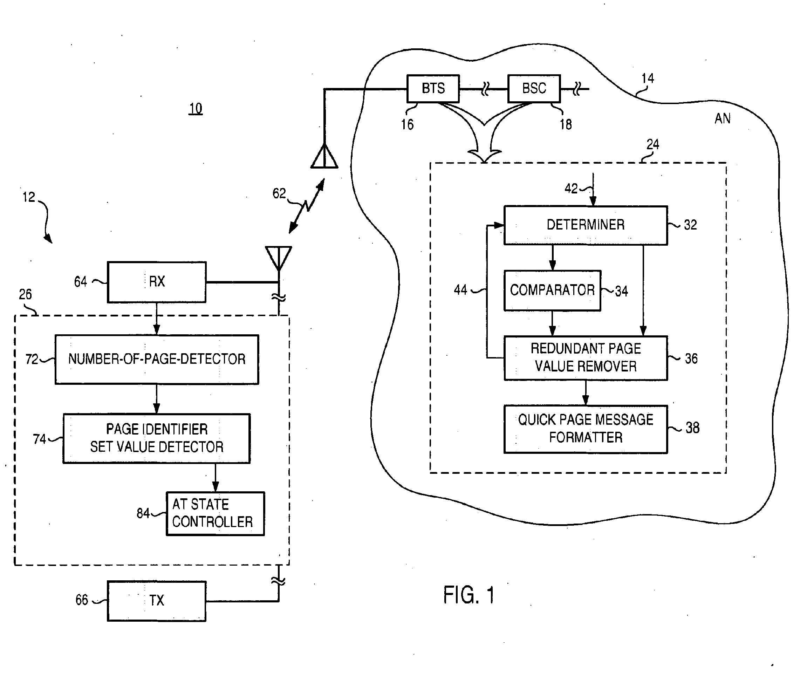

Referring first, therefore, to Figure 1, a radio communication system, shown generally at 10, provides for communications with access terminals, of which the access terminal 12 is exemplary. The communication system forms a multi-user communication system that typically includes a large number of access terminals and a plurality of concurrent communication dialogs. While only a single access terminal is shown in Figure 1, additional access terminals, analogous to the access terminal 12, typically form a portion of the communication system.

Communications are effectuated between an access terminal and a radio network 14, formed of fixed network infrastructure elements, such as a base transceiver station (BTS) 16 and a base station controller (BSC) 18. The access network encompasses a geographical area within which communications with the access network are possible. That is to say, when an access terminal is positioned within the area encompassed by the access network, the access terminal is generally able to communicate with the access network, and the access network is typically able to communicate with the access terminal.

The communication system is operable in general conformity with the operating protocols and parameters of an appropriate communication specification standard. The description set forth herein is exemplary, and the teachings of various embodiments of the present invention are implementable in any of various types of communication systems.

As previously mentioned, access terminals are alerted, by broadcast of a page message when a communication, initiated at the network, is to be terminated at an access terminal. A quick paging channel (QPCH), or analogous channel, is defined. Information contained in a quick page message broadcast on the quick paging channel identifies access terminals that are paged. When an access terminal detects, from the quick page message, that the access terminal is paged, the access terminal further operates in anticipation of the page and subsequent communication. The access terminal, conversely, enters into a reduced-power consumption state, e.g., a sleep state. If the access terminal incorrectly determines that it is being paged, the access terminal falsely wakes up. And, increased levels of power are consumed by the access terminal, resulting in reduced battery longevity. The aforementioned partial hash comparison scheme is intended to reduce the likelihood of false wakeup of the access terminal, but, as presently implemented, provides advantages only when a quick page message pages five or fewer access terminals. Additionally, not all of the bits of a quick page message are fully utilized in every paging scenario, and the existing scheme, for this reason, is less than ideal.

Accordingly, pursuant to an embodiment of the present invention, the access network includes apparatus 24, and the access terminal includes apparatus 26, that operate pursuant to quick page message generation and quick page message receipt in manners that reduce the likelihood of occurrence of false wakeup. The elements of the apparatus 24 and of the apparatus are functionally represented, implementable in any desired manner, including, for instance, by algorithms executable by processing circuitry.

The elements forming the apparatus 24 are implemented at any appropriate location of the access network, including, as illustrated, at the BTS 16 or BSC 18, or distributed amongst such entities, as well as others.

Here, the apparatus 24 includes a determiner 32, a comparator 34, a redundant page value remover 36, and a quick page message formatter 38.

The determiner 32 operates to determine page values of page identifier sets that are associated with access terminals that are to be paged in a quick page message. That is to say, the determiner is provided, here indicated by way of the lines 42, with the identities, such as by their ATIs, of the access terminals that are to be paged. The number of terminals that are paged is determinative of the lengths of the page identifier sets that are includable in the quick page message. When more pages are to be included in the page message, the lengths of the page identifier sets that identify each of the access terminals being paged are less than the lengths permitted when fewer numbers of access terminals are being paged. Most significant bits of the ATIs are used. And, the determiner determines the parts of the ATIs that can be used, depending upon the number of pages to be included in the quick page message. If two pages are to be included in the quick page message, each page identifier set is of sixteen-bit lengths, the sixteen most significant bits of the ATIs. When numbers other than ATIs are used, analogous portions of such other numbers are, e.g., instead utilized. In the exemplary implementation in which thirty-two bits are available in which to identify the access terminals and three bits are used to identify the number of pages in the quick page message, the thirty-two bits are collectively available by which to be used to identify access terminals that are to be paged. Pursuant to a further embodiment of the present invention, in the event that the number of access terminals that are to be paged do not permit for an equal division of the thirty-two bits, unequal numbers of bits are allocated to identify different ones of the access terminals while fully utilizing all thirty-two available bits. For instance, when three access terminals are to be paged, one access terminal is identified with an eleven-bit length page identifier set while the other two access terminals are identified with ten-bit length page identifier sets.

Indications of the identifiers determined by the determiner are provided to a comparator 34. The comparator 34 operates to compare the different values and to identify if any of the page identifier sets are of identical values. When parts of the ATIs are utilized, that is to say, the selected number of most significant bits of the ATIs of the access terminals that are to be paged are used, there is a possibility that the most significant bits identifying more than one access terminal are identical to the corresponding values that identify another access terminal. Operation of the comparator identifies such identical values.

Indications of comparisons made by the comparator are provided to the redundant page value remover 36. The redundant page value remover removes values, that is to say, page identifier set bits, that are redundant, freeing up bit space in the quick page message. In the exemplary implementation, upon removal of the redundant bit values, the determiner is caused to redetermine the page values of the identifiers of the access terminals that are to be paged. Here, indication is provided to the determiner by way of the line 44 of the removal of the redundant bit values and the need to redetermine the identifiers used to identify the paged access terminals. Upon removal of the redundant page values, increased bits are available to identify the access terminals that are paged or, the partial identity comparison scheme is able to be used when greater than five access terminals are to be paged. Redetermined values are provided by the determiner to the redundant page value remover and thereafter provided to the quick page message formatter 38. The quick page message formatter forms the quick page message populated with page identifier sets that are selectably free of redundancies through the removal of the redundant page value remover, comparator 34, and determiner 32.

Transceiver elements of the base transceiver station 16 cause broadcast of quick page messages that have been formatted by the quick page message formatter. The messages are broadcast upon a radio air interface, represented in Figure 1 by the arrow 62. The messages are delivered to access terminals, such as the access terminal 12, within reception range of the broadcast messages. The access terminal 12 includes transceiver circuitry, here represented by a receive part 64 and a transmit part 66. The receive part 64 operates to receive signals sent thereto, such as the quick page messages broadcast by the access network. And, certain of the detected signals are provided to the apparatus 26 embodied at the access terminal. Of significance here are detections of the quick page message broadcast by the access network.

The apparatus 26 includes a number of page detector 72 and a page identifier set value detector 74. The elements are functionally represented, also implementable in any desired manner, including algorithms executable by processing circuitry. The detector 72 detects an indication in the quick page message of the number of pages that are included in the received quick page message. The number of pages are indicated in, e.g., and as noted above, a three-bit segment of the quick page message. Detection of such indication is used by the page identifier set value detector in the detection of the page identifier sets, thereby to determine whether the access terminal is paged. Additional operation at the access terminal determines, in response to the number of pages detected by the page detector of the page value lengths of the page identifier set or sets contained in the quick page message. In the event that the detector detects the access terminal not to be paged, an indication is provided to an access terminal (AT) state controller 84 to cause the access terminal to be placed in a reduced power state, e.g., a sleep mode. If a page is detected, conversely, an indication is provided to the state controller and the controller causes the state of the access terminal to permit its further operation with respect to paging and further communication.

While an existing comparison scheme is used only when five or fewer access terminals are paged, operation of an embodiment of the present invention is potentially permitting of performance of a partial identity comparison scheme in the event that more than five access terminals are being paged, but one or more of the identifiers, that is, page identifier sets are identical. For example, if seven access terminals are being paged and three of the access terminals being paged have the same six bits as their most significant bits, the apparatus 24 operates to eliminate two of the three duplicates page identifier sets and is then able to include five six-bit page identifier sets, herein also referred to as hashes, using partial identity comparison. Otherwise, individual page indication bits are inserted in specified locations of the message, their locations being selected through operation of a hash function generator.

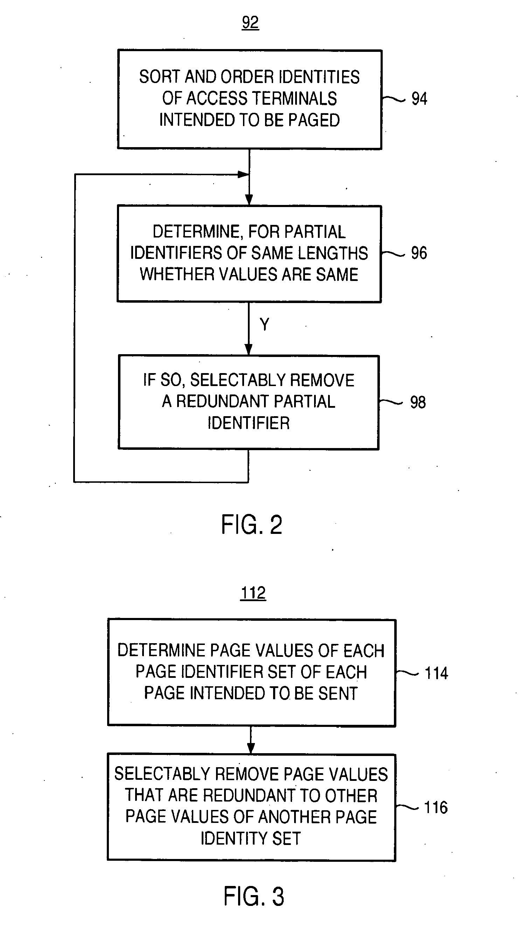

Figure 2 illustrates a diagram, shown generally at 92, representative of a procedure performed at the apparatus 26, or otherwise at the access network, by which to eliminate duplicate values from a quick page message. First, and as indicated by the block 94, the identities are sorted and ordered with the process first commencing with identities having the largest lengths, that is to say, largest number of bits. Then, and as indicated by the decision block 96, a determination is made as to whether the identities of that number of bits, that is length, are of the same values. If so, the yes branch is taken and, as indicated by the block 98, a redundant identity value is removed. The process continues for so long as there are enough partial identities of the size to hold the remaining identities. If the number of partial identities at this size is the same as the number of identities that remain, the partial identities are filled into a message, and the process ends.

If the current number of bits of the partial identity is equal to the smallest number possible, then the partial identity comparison scheme is not utilized. Instead, paging indicator is instead utilized. As noted above, pursuant to exemplary operation, all bits of the quick page message are used even if unequal bit number allocations are made for paging different access terminals within a single page message. By doing so, the false wakeup probability is reduced. Additionally, partial bits of random or pseudorandom numbers known to both the access network and the access terminal are used for the reason that such values are sometimes more random than a hash value generated by a hash function. And, further, partial address bits are used for this reason rather than for partial hash bits.

Figure 3 illustrates a method flow diagram, shown generally at 112, representative of the method of operation of an embodiment of the present invention. The method facilitates paging by an access network that selectably generates a first page message on a first paging channel.

First, and as indicated by the block 114, page values of each page identifier set of each page intended to be included in the first page message is determined. Then, and as indicated by the block 116, page values intended to be included in the first page message are selectably removed. The page values selected to be removed are those that are redundant to page values of another page identity set.

The previous descriptions are of preferred examples for implementing the invention, and the scope of the invention should not necessarily be limited by this description. The scope of the present invention is defined by the following claims.

## Claims

1. Apparatus (24) for an access network (14) of a communication network (10) that generates a first page message on a first paging channel, said first page message being comprised of a first fixed number of binary digits and which can be used to page a plurality of wireless access terminals (12) within the access network (14), each access terminal (12) being identified by a plurality of binary digits that form an access terminal identifier, a first part of the access terminal identifier for a first access terminal (12) in the first page message capable of being the same as a corresponding first part of the access terminal identifier for a second access terminal (12) in the first page message, said apparatus **characterized by**:
a determiner (32) configured to receive a number of access terminal identifiers and to determine there from a number of page identifiers to be fitted into the first page message, page identifiers in the first page message being comprised of a portion of the received access terminal identifiers when two or more access terminals (12) are to be paged in the first page message, the determiner (32) being additionally configured to determine the portion and number of binary digits of each received access terminal identifier to be used to form each page identifier to be included in the first page message, a page identifier for a second access terminal (12) that matches a page identifier for a first access terminal (12) being considered redundant; and
a redundant page identifier remover (36) configured to remove at least one redundant page identifier intended to be included in the first page message.

2. The apparatus of claim 1 further comprising a comparator (34) configured to compare each page identifier intended to be included in the first page message and wherein the page identifier removed by said redundant page identifier remover (34) is removed responsive to comparisons made by said comparator (34).

3. The apparatus of claim 1 wherein each page identifier comprises a selected number of bits of an identifier associated with a corresponding page.

4. The apparatus of claim 3 wherein the selected number of bits of each page identifier is responsive to how many page identifiers are intended to be included in the first paging message.

5. The apparatus of claim 1 further comprising a selector (38) configured to select page identifier lengths.

6. The apparatus of claim 5 wherein the first page message is of a prescribed length and wherein the page identifier lengths selected by said selector are dependent upon both the prescribed length of the first page message, and a number of page identifiers to be included in the first page message.

7. The apparatus of claim 6 wherein the first page message includes a page identity part and wherein each page identifier of the first page message is inserted in the page identity part.

8. The apparatus of claim 7 wherein selection made by said selector (38) of the page identifier lengths comprises selection to fill the page identity part.

9. The apparatus of claim 8 wherein the first page message comprises a plurality of pages identified by a corresponding, plurality of page identifiers , a length of at least one page identifier is different than another page identifier.

10. The apparatus of claim 1 wherein the values of each page identifier comprise parts of page-recipient identifiers that are defined in the access network.

11. A method (92) for facilitating paging by an access network (14) that generates a first page message on a first paging channel, said first page message being comprised of a first fixed number of binary digits and which can be used to page wireless access terminals (12) within the access network (14), each access terminal (12) being identified by a plurality of binary digits that form an access terminal identifier, a first part of the access terminal identifier for a first access terminal in the first page message capable of being the same as a corresponding first part of the access terminal identifier for a second access terminal in the first page message, said method **characterized by** the steps of:
determining (96) a number of page identifiers to be fitted into the first page message, the page identifiers comprising a portion of the access terminal identifiers of the access terminals to be paged, and determining whether a portion of the binary digits of each access terminal identifier to be used to form each page identifier intended to be included in the first page message is the same as another access terminal identifier; and
removing (98) page identifiers intended to be included in the first page message that are redundant with respect to another page identifier, also intended to be part of the first page message.

12. The method of claim 11 further comprising comparing each page identifier intended to be included in the first page message and wherein the removed page values are removed responsive to comparisons made during comparison.

13. The method of claim 11 wherein each page identifier comprises a selected number of bits of an identifier associated with a corresponding page.

14. The method of claim 13 wherein the selected number of bits of each page identifier is responsive to how many pages are intended to be included in the first page message.

15. The method of claim 11 further comprising selecting page identifier lengths that are determinative, in part, of the page values.

16. The method of claim 15 wherein the first page message is of a prescribed length and wherein the page identifier length is dependent upon both the prescribed length of the first page message and a number of page identifiers included in the first page message.

17. The method of claim 16 wherein the first page message includes a page identity part and wherein each page identifier of the first page message is inserted in the page identity part.

18. The method of claim 11 further comprising:
broadcasting the first page message to an access terminal; and
deciding at the access terminal whether the access terminal is paged.

19. The method of claim 11 wherein said operation of removing comprises iteratively removing redundant page values until the page identifiers are collectively of a desired length that is less than or equal to the first fixed number of binary digits.

20. Apparatus for an access terminal that monitors a first paging channel for delivery of a first paging message, said apparatus **characterized by**:
a number of pages detector (72) configured to detect how many page identifiers are included in the first paging message; and
a page identifier value detector (74) configured to detect values of each page identifier detected by said number of pages detector (72) to be included in the first paging message, the first paging message free of page identifiers that are equal to each other.

21. A method for an access terminal that monitors a first paging channel for delivery of a first paging message, said method **characterized by** the steps of:
detecting (114) how many page identifier are included in the first paging message; and
detecting (116) values of each page identifier included in the first paging message, the first paging message free of page value redundancies.

## Patentansprüche

1. Vorrichtung (24) für ein Zugangsnetzwerk (14) eines Kommunikationsnetzwerks (10), das eine erste Page- bzw. Funkruf-Nachricht auf einem ersten Paging-Kanal erzeugt, wobei die erste Page-Nachricht eine erste feste Anzahl von binären Ziffern umfasst und die verwendet werden kann, um an eine Vielzahl von drahtlosen Zugangs-Terminals (12) in dem Zugangsnetzwerk (14) einen Funkruf zu senden (to page), wobei jedes Zugangs-Terminal (12) durch eine Vielzahl von binären Ziffern identifiziert wird, die einen Zugangs-Terminal-Identifizierer bilden, wobei ein erster Teil des Zugangs-Terminal-Identifizierers für ein erstes Zugangs-Terminal (12) in der ersten Page-Nachricht fähig ist, derselbe zu sein wie ein entsprechender erster Teil des Zugangs-Terminal-Identifizierers für ein zweites Zugangs-Terminal (12) in der ersten Page-Nachricht, wobei die Vorrichtung **gekennzeichnet ist durch**:
einen Bestimmer (32), der konfiguriert ist, eine Anzahl von Zugangs-Terminal-Identifizierem zu empfangen und daraus eine Anzahl von Page-Identifizierern zu bestimmen, die in die erste Page-Nachricht eingesetzt werden, wobei Page-Identifizierer in der ersten Page-Nachricht einen Teil der empfangenen Zugangs-Terminal-Identifizierer umfassen, wenn zwei oder mehr Zugangs-Terminals (12) in der ersten Page-Nachricht gerufen werden sollen, wobei der Bestimmer (32) zusätzlich konfiguriert ist, den Teil und die Anzahl von binären Ziffern jedes empfangenen Zugangs-Terminal-Identifizierers zu bestimmen, der verwendet wird, um jeden Page-Identifizierer zu bilden, der in der ersten Page-Nachricht enthalten ist, wobei ein Page-Identifizierer für ein zweites Zugangs-Terminal (12), der mit einem Page-Identifizierer für ein erstes Zugangs-Terminal (12) übereinstimmt, als redundant betrachtet wird; und
einen "redundanter Page-Identifizierer"-Entferner (36), der konfiguriert ist, zumindest einen redundanten Page-Identifizierer zu entfernen, der in die erste Page-Nachricht aufgenommen werden soll.

2. Vorrichtung gemäß Anspruch 1, die weiter einen Komparator (34) aufweist, der konfiguriert ist, jeden Page-Identifizierer zu vergleichen, der in die erste Page-Nachricht aufgenommen werden soll, und wobei der Page-Identifizierer, der durch den "redundanter Page-Identifizierer"-Entferner (34) entfernt wird, als Reaktion auf Vergleiche entfernt wird, die durch den Komparator (34) durchgeführt werden.

3. Vorrichtung gemäß Anspruch 1, wobei jeder Page-Identifizierer eine ausgewählte Anzahl von Bits eines Identifizierers aufweist, der zu einem entsprechendem Page bzw. Funkruf gehört.

4. Vorrichtung gemäß Anspruch 3, wobei die ausgewählte Anzahl von Bits jedes Page-Identifizierers davon abhängig ist, wie viele Page-Identifizierer in die erste Page-Nachricht aufgenommen werden sollen.

5. Vorrichtung gemäß Anspruch 1, die weiter einen Selektor (38) aufweist, der konfiguriert ist, Page-Identifizierer-Längen auszuwählen.

6. Vorrichtung gemäß Anspruch 5, wobei die erste Page-Nachricht eine vorgeschriebene Länge hat und wobei die Page-Identifizierer-Längen, die durch den Selektor ausgewählt werden, abhängig sind von sowohl der vorgeschriebenen Länge der ersten Page-Nachricht und einer Anzahl von Page-Identifizierern, die in die erste Page-Nachricht aufgenommen werden sollen.

7. Vorrichtung gemäß Anspruch 6, wobei die erste Page-Nachricht einen Page-Identitäts-Teil umfasst und wobei jeder Page-Identifizierer der ersten Page-Nachricht in den Page-Identitäts-Teil eingefügt wird.

8. Vorrichtung gemäß Anspruch 7, wobei eine Auswahl der Page-Identifizierer-Längen durch den Selektor (38) eine Auswahl aufweist, den Page-Identitäts-Teil zu füllen.

9. Vorrichtung gemäß Anspruch 8, wobei die erste Page-Nachricht eine Vielzahl von Pages aufweist, die durch eine entsprechende Vielzahl von Page-Identifizierem identifiziert werden, wobei eine Länge zumindest eines Page-Identifizierers anders ist als ein anderer Page-Identifizierer.

10. Vorrichtung gemäß Anspruch 1, wobei die Werte jedes Page-Identifizierers Teile von Page-Empfänger-Identifizierern aufweisen, die in dem Zugangsnetzwerk definiert werden.

11. Verfahren (92) zur Erleichterung eines Pagings durch ein Zugangsnetzwerk (14), das eine erste Page-Nachricht auf einem ersten Paging-Kanal erzeugt, wobei die erste Page-Nachricht eine erste feste Anzahl von binären Ziffern umfasst und die verwendet werden kann, um an drahtlose Zugangs-Terminals (12) in dem Zugangsnetzwerk (14) einen Funkruf zu senden (to page), wobei jedes Zugangs-Terminal (12) durch eine Vielzahl von binären Ziffern identifiziert wird, die einen Zugangs-Terminal-Identifizierer bilden, wobei ein erster Teil des Zugangs-Terminal-Identifizierers für ein erstes Zugangs-Terminal in der ersten Page-Nachricht fähig ist, derselbe zu sein wie ein entsprechender erster Teil des Zugangs-Terminal-Identifizierers für ein zweites Zugangs-Terminal in der ersten Page-Nachricht, wobei das Verfahren **gekennzeichnet ist durch** die Schritte:
Bestimmen (96) einer Anzahl von Page-Identifizierern, die in die erste Page-Nachricht eingesetzt werden, wobei die Page-Identifizierer einen Teil der Zugangs-Terminal-Identifizierer der zu pagenden Zugangs-Terminals umfassen, und Bestimmen, ob ein Teil der binären Ziffern jedes Zugangs-Terminal-Identifizierers, der verwendet wird, um jeden Page-Identifizierer zu bilden, der in der ersten Page-Nachricht enthalten sein soll, derselbe ist wie ein anderer Zugangs-Terminal-Identifizierer; und
Entfernen (98) von Page-Identifizierern, die in die erste Page-Nachricht aufgenommen werden sollen, die redundant sind hinsichtlich eines anderen Page-Identifizierers, der ebenfalls in die erste Page-Nachricht aufgenommen werden soll.

12. Verfahren gemäß Anspruch 11, das weiter aufweist ein Vergleichen jedes Page-Identifizierers, der in die erste Page-Nachricht aufgenommen werden soll, und wobei die entfernten Page-Werte entfernt werden als Reaktion auf Vergleiche, die während eines Vergleichs gemacht werden.

13. Verfahren gemäß Anspruch 11, wobei jeder Page-Identifizierer eine ausgewählte Anzahl von Bits eines Identifizierers aufweist, der zu einem entsprechenden Page gehört.

14. Verfahren gemäß Anspruch 13, wobei die ausgewählte Anzahl von Bits jedes Page-Identifizierers davon abhängig ist, wie viele Page-Identifizierer in die erste Page-Nachricht aufgenommen werden sollen.

15. Verfahren gemäß Anspruch 11, das weiter aufweist ein Auswählen von Page-Identifizierer-Längen, die zum Teil für die Page-Werte bestimmend sind.

16. Verfahren gemäß Anspruch 15, wobei die erste Page-Nachricht eine vorgeschriebene Länge hat und wobei die Page-Identifizierer-Länge abhängig ist von sowohl der vorgeschriebenen Länge der ersten Page-Nachricht und einer Anzahl von Page-Identifizierern, die in die erste Page-Nachricht aufgenommen werden.

17. Verfahren gemäß Anspruch 16, wobei die erste Page-Nachricht einen Page-Identitäts-Teil umfasst und wobei jeder Page-Identifizierer der ersten Page-Nachricht in den Page-Identitäts-Teil eingefügt wird.

18. Verfahren gemäß Anspruch 11, das weiter aufweist:
Aussenden der ersten Page-Nachricht an ein Zugangs-Terminal; und
Entscheiden an dem Zugangs-Terminal, ob das Zugangs-Terminal gerufen wird.

19. Verfahren gemäß Anspruch 11, wobei die Operation des Entfernens ein iteratives Entfernen von redundanten Page-Werten aufweist, bis die Page-Identifizierer alle eine gewünschte Länge haben, die geringer oder gleich zu der ersten festen Anzahl von binären Ziffern ist.

20. Vorrichtung für ein Zugangs-Terminal, das einen ersten Paging-Kanal hinsichtlich einer Lieferung einer ersten Paging-Nachricht überwacht, wobei die Vorrichtung **gekennzeichnet ist durch**:
eine Anzahl von Pages-Detektoren (72), die konfiguriert sind, zu erfassen, wie viele Page-Identifizierer in der ersten Paging-Nachricht enthalten sind; und
einen Page-Identifizierer-Wert-Detektor (74), der konfiguriert ist, Werte jedes Page-Identifizierers zu erfassen, die **durch** die Anzahl von Pages-Detektoren (72) erfasst werden, die in der ersten Paging-Nachricht aufgenommen werden sollen, wobei die erste Paging-Nachricht frei ist von Page-Identifizierern, die zueinander gleich sind.

21. Verfahren für ein Zugangs-Terminal, das einen ersten Paging-Kanal hinsichtlich einer Lieferung einer ersten Paging-Nachricht überwacht, wobei das Verfahren **gekennzeichnet ist durch** die Schritte:
Erfassen (114), wie viele Page-Identifizierer in der ersten Paging-Nachricht enthalten sind; und
Erfassen (116) von Werten jedes Page-Identifizierers, der in der ersten Paging-Nachricht enthalten ist, wobei die erste Paging-Nachricht frei ist von Page-Wert-Redundanzen.

## Revendications

1. Appareil (24) pour un réseau d'accès (14) d'un réseau de communication (10) qui génère un premier message de radiomessagerie sur un premier canal de radiomessagerie, ledit premier message de radiomessagerie étant constitué d'un premier nombre fixe de chiffres binaires qui peuvent être utilisés pour appeler par radiomessagerie de multiples terminaux d'accès sans fil (12) à l'intérieur du réseau d'accès (14), chaque terminal d'accès (12) étant identifié par de multiples chiffres binaires qui forment un identifiant de terminal d'accès, une première partie de l'identifiant du terminal d'accès pour un premier terminal d'accès (12) dans le premier message de radiomessagerie pouvant être identique à une partie correspondante de l'identifiant de terminal d'accès pour un second terminal d'accès (12) dans le premier message de radiomessagerie, ledit appareil étant **caractérisé par** :
un dispositif de détermination (32) configuré pour recevoir un nombre d'identifiant de terminaux d'accès et pour déterminer à partir de celui-ci un nombre d'identifiant de radiomessagerie devant être logé dans le premier message de radiomessagerie, des identifiants de radiomessagerie dans le premier message de radiomessagerie étant constitués d'une partie des identifiants reçus de terminaux d'accès lorsque deux ou plus de deux terminaux d'accès (12) doivent être appelés par radiomessagerie dans le premier message de radiomessagerie, le dispositif de détermination (32) étant en outre configuré pour déterminer la partie et le nombre de chiffres binaires de chaque identifiant reçu de terminal d'accès devant être utilisé pour former chaque identifiant de radiomessagerie devant être inclus dans le premier message de radiomessagerie, un identifiant d'appel de radiomessagerie pour un second terminal d'accès (12) qui concorde avec un identifiant d'appel de radiomessagerie pour un premier terminal d'accès (12) étant considéré comme redondant ; et
un suppresseur (36) d'identifiant d'appel de radiomessagerie redondant configuré pour supprimer au moins un identifiant d'appel de radiomessagerie redondant devant être inclus dans le premier message de radiomessagerie.

2. Appareil selon la revendication 1, comportant en outre un comparateur (34) configuré pour comparer chaque identifiant d'appel de radiomessagerie devant être inclus dans le premier message de radiomessagerie et dans lequel l'identifiant d'appel de radiomessagerie supprimé par ledit suppresseur (34) d'identifiant d'appel de radiomessagerie redondant est supprimé en réponse à des comparaisons réalisées par ledit comparateur (34).

3. Appareil selon la revendication 1, dans lequel chaque identifiant d'appel de radiomessagerie comporte un nombre sélectionné de bits d'un identifiant associé à un appel de radiomessagerie correspondant.

4. Appareil selon la revendication 3, dans lequel le nombre sélectionné de bits de chaque identifiant d'appel de radiomessagerie varie en fonction du nombre d'identifiants d'appels de radiomessagerie devant être inclus au premier message de radiomessagerie.

5. Appareil selon la revendication 1, comportant en outre un sélecteur (38) configuré pour sélectionner des longueurs d'identifiant d'appel de radiomessagerie.

6. Appareil selon la revendication 5, dans lequel le premier message de radiomessagerie est d'une longueur prescrite et dans lequel les longueurs d'identifiants d'appels de radiomessagerie sélectionnées par ledit sélecteur dépendent à la fois de la longueur prescrite du premier message de radiomessagerie, et d'un nombre d'identifiants d'appels de radiomessagerie devant être inclus dans le premier message de radiomessagerie.

7. Appareil selon la revendication 6, dans lequel le premier message de radiomessagerie comprend une partie d'identité d'appel de radiomessagerie et dans lequel chaque identifiant de radiomessagerie du premier message de radiomessagerie est inséré dans la partie d'identité d'appel de radiomessagerie.

8. Appareil selon la revendication 7, dans lequel une sélection réalisée par ledit sélecteur (38) des longueurs d'identifiant de radiomessagerie comprend une sélection pour remplir la partie d'identité d'appel de radiomessagerie.

9. Appareil selon la revendication 8, dans lequel le premier message de radiomessagerie comporte de multiples appels de radiomessagerie identifiés par une pluralité correspondante d'identifiants d'appels de radiomessagerie, une longueur d'au moins un identifiant de radiomessagerie étant différente de celle d'un autre identifiant de radiomessagerie.

10. Appareil selon la revendication 1, dans lequel les valeurs de chaque identifiant de radiomessagerie comprennent des parties d'identifiants destinataires d'appel de radiomessagerie qui sont définis dans le réseau d'accès.

11. Procédé (92) pour faciliter la radiomessagerie par un réseau d'accès (14) qui génère un premier message d'appel de radiomessagerie sur un premier canal de radiomessagerie, ledit premier message d'appel de radiomessagerie étant constitué d'un premier nombre fixe de chiffres binaires et pouvant être utilisé pour appeler par radiomessagerie des terminaux d'accès sans fil (12) à l'intérieur du réseau d'accès (14), chaque terminal d'accès (12) étant identifiés par de multiples chiffres binaires qui forment un identifiant de terminal d'accès, une première partie de l'identifiant de terminal d'accès pour un premier terminal d'accès dans le premier message d'appel de radiomessagerie pouvant être identique à une première partie correspondante de l'identifiant de terminal d'accès pour un second terminal d'accès dans le premier message d'appel de radiomessagerie, ledit procédé étant **caractérisé par** les étapes qui consistent :
à déterminer (96) un nombre d'identifiants d'appel de radiomessagerie devant être logés dans le premier message d'appel de radiomessagerie, les identifiants d'appel de radiomessagerie comprenant une partie des identifiants de terminaux d'accès des terminaux d'accès devant être appelés par radiomessagerie, et à déterminer si une partie des chiffres binaires de chaque identifiant de terminal d'accès devant être utilisés pour former chaque identifiant d'appel de radiomessagerie devant être incorporé dans le premier message d'appel de radiomessagerie est identique à un autre identifiant de terminal d'accès ; et
à supprimer (98) des identifiants d'appel de radiomessagerie devant être inclus dans le premier message d'appel de radiomessagerie qui sont redondants par rapport à un autre identifiant d'appel de radiomessagerie, devant également faire partie du premier message d'appel de radiomessagerie.

12. Procédé selon la revendication 11, comprenant en outre la comparaison de chaque identifiant d'appel de radiomessagerie devant être incorporé dans le premier message d'appel de radiomessagerie et dans lequel des valeurs d'appel de radiomessagerie supprimées sont supprimées en réponse à des comparaisons réalisées pendant la comparaison.

13. Procédé selon la revendication 11, dans lequel chaque identifiant d'appel de radiomessagerie comprend un nombre sélectionné de bits d'un identifiant associé à un appel de radiomessagerie correspondant.

14. Procédé selon la revendication 13, dans lequel le nombre sélectionné de bits de chaque identifiant d'appel de radiomessagerie dépend du nombre d'appels de radiomessagerie qu'il est prévu d'inclure dans le premier message d'appel de radiomessagerie.

15. Procédé selon la revendication 11, comprenant en outre la sélection de longueurs d'identifiant d'appel de radiomessagerie qui détermine, en partie, les valeurs d'appel de radiomessagerie.

16. Procédé selon la revendication 15, dans lequel le premier message d'appel de radiomessagerie est d'une longueur prescrite et dans lequel la longueur d'identifiant d'appel de radiomessagerie dépend à la fois de la longueur prescrite du premier message d'appel de radiomessagerie et d'un nombre d'identifiants d'appel de radiomessagerie inclus dans le premier message d'appel de radiomessagerie.

17. Procédé selon la revendication 16, dans lequel le premier message d'appel de radiomessagerie comprend une partie d'identité d'appel de radiomessagerie et dans lequel chaque identifiant d'appel de radiomessagerie du premier message d'appel de radiomessagerie est inséré dans la partie d'identité d'appel de radiomessagerie.

18. Procédé selon la revendication 11, comprenant en outre :
la radiodiffusion du premier message d'appel de radiomessagerie à un terminal d'accès ; et
le fait de décider au niveau du terminal d'accès si le terminal d'accès est appelé par radiomessagerie.

19. Procédé selon la revendication 11, dans lequel ladite opération de suppression comprend la suppression itérative de valeurs d'appel de radiomessagerie redondantes jusqu'à ce que les identifiants d'appel de radiomessagerie soient collectivement d'une longueur souhaitée qui est inférieure ou égale au premier nombre fixe de chiffres binaires.

20. Appareil pour un terminal d'accès qui surveille un premier canal de radiomessagerie pour délivrer un premier message de radiomessagerie, ledit appareil étant **caractérisé par** :
un détecteur (72) de nombre d'appels de radiomessagerie configuré pour détecter combien d'identifiants d'appels de radiomessagerie sont inclus dans le premier message de radiomessagerie ; et
un détecteur (74) de valeurs d'identifiants d'appel de radiomessagerie configuré pour détecter des valeurs de chaque identifiant d'appel de radiomessagerie détecté par ledit détecteur (72) dudit nombre d'appels de radiomessagerie devant être inclus dans le premier message de radiomessagerie, le premier message de radiomessagerie étant exempt d'identifiants d'appels de radiomessagerie qui sont égaux entre eux.

21. Procédé pour un terminal d'accès qui surveille un premier canal de radiomessagerie pour délivrer un premier message de radiomessagerie, ledit procédé étant **caractérisé par** les étapes qui consistent :
à détecter (114) combien d'identifiants d'appels de radiomessagerie sont inclus dans le premier message de radiomessagerie ; et
à détecter (116) des valeurs de chaque identifiant d'appel de radiomessagerie inclus dans le premier message de radiomessagerie, le premier message de radiomessagerie étant exempt de redondances de valeurs d'appel de radiomessagerie.
